# EUROPEAN PATENT SPECIFICATION

(11) **EP 3 684 140 B1**
(45) Date of publication and mention of the grant of the patent: **18.08.2021**
(21) Application number: 20151940.2
(22) Date of filing: 15.01.2020
(51) Int. Cl.: H05B 3/84, H05B 3/34, B60J 11/02

(54) **VEHICULAR WINDOW ACCESSORY**
FAHRZEUGFENSTERZUBEHÖR
ACCESSOIRE DE FENÊTRE DE VÉHICULE

(30) Priority: 17.01.2019 US 201962793482 P
(43) Date of publication of application: 22.07.2020
(73) Proprietor: Barrett, Devon Loren, Windsor, Onario N8X 1P9 (CA); Rose, Marco, Windsor, Ontario N9E 2S5 (CA)
(72) Inventor: Barrett, Devon Loren, Windsor, Onario N8X 1P9 (CA); Rose, Marco, Windsor, Ontario N9E 2S5 (CA)
(74) Representative: Guardian IP Consulting I/S

(56) References cited:
- JP-A- H11 301 283
- KR-B1- 101 744 348
- US-A1- 2017 158 030

## Description

### FIELD OF INVENTION

The present invention relates generally to motor vehicles, more specifically but not by way of limitation, a motor vehicle accessory that is configured to be superposed some or all of the windows of a vehicle wherein the present invention inhibits the accumulation of precipitation types such as but not limited to ice or snow. Additionally, the present invention further functions to inhibit the fogging of windows.

### BACKGROUND

Millions of people routinely drive motor vehicles on a daily basis. Whether commuting to work or driving to alternate destinations motor vehicle utilization is part of a daily routine for most people. During utilization of their vehicles, individuals will drive and be subjected to many different types of environmental conditions. Conditions such as but not limited to snow, ice and rain can have an adverse effect on an individuals' ability to safely operate a vehicle. The aforementioned adverse conditions can routinely create visibility issues for the windows of the vehicle. Precipitation such as but not limited to snow or ice can accumulate on various windows of a motor vehicle and substantially impair an individual's ability to see effectively through the window. Furthermore, temperature differentials between the interior of the motor vehicle and the exterior coupled with humidity can produce condensation or fogging of all or part of the window making visibility therethrough difficult.

One issue with conventional motor vehicles is their inability to assist in the management of the aforementioned for all of the windows of the vehicle. Existing technology employs defrosters and/or heaters that will assist in the removal and or inhibiting of the formation of materials or matter that will result in poor visibility. These technologies are only employed on front and rear windows and do not provide the desired effect for side windows. Additionally, existing technology only provides removal or management during operation of the motor vehicle and does not provide assistance with accumulation of matter such as but not limited to snow or ice during periods when the motor vehicle is not in use.

One proposed solution is found in US 2017/158030A1 of Osta, which proposes a windshield screen with heating elements, but creates new problems with both securing the screen to the windshield and for storage of the screen when not in use.

It is intended within the scope of the present invention to provide a motor vehicle accessory that will inhibit the accumulation of many types of precipitation wherein the present invention can be utilized during periods of vehicle operation and/or non-operation to provide the desired result.

### SUMMARY OF THE INVENTION

It is the object of the present invention to provide a motor vehicle window accessory wherein the accessory is placed adjacent to all or some of the windows of a motor vehicle wherein the present invention includes a body that is transparent so as to ensure visibility therethrough.

Another object of the present invention is to provide a window treatment apparatus for a motor vehicle configured to inhibit accumulation of precipitation on the windows of a vehicle and further desired effects wherein the body of the present invention is manufactured from transparent plastic or rubber and includes an inner surface adjacent to the window and an outer surface.

A further object of the present invention is to provide a motor vehicle window accessory wherein the accessory is placed adjacent to all or some of the windows of a motor vehicle wherein the body could be configured to encapsulate the entire top of the motor vehicle or configured to encircle the windows of a motor vehicle.

Still another object of the present invention is to provide a provide a window treatment apparatus for a motor vehicle configured to inhibit accumulation of precipitation on the windows of a vehicle and further desired effects wherein the body includes disposed therein a plurality of low voltage diodes and/or wiring that are operable to maintain a temperature that is different than that of the environmental surroundings.

An additional object of the present invention is to provide a motor vehicle window accessory wherein the accessory is placed adjacent to all or some of the windows of a motor vehicle wherein the body in one embodiment can be configured to be stored in the door jamb of a vehicle when not in use.

Yet a further object of the present invention is to provide a provide a window treatment apparatus for a motor vehicle configured to inhibit accumulation of precipitation on the windows of a vehicle and further desired effects wherein the body can include magnets on various portions thereof as needed to secure the body in either a deployed or stored position.

Another object of the present invention is to provide a motor vehicle window accessory wherein the accessory is placed adjacent to all or some of the windows of a motor vehicle wherein the body can include reinforcing construction and/or material proximate the perimeter edges thereof so as to ensure structural integrity.

An alternate object of the present invention is to provide a provide a window treatment apparatus for a motor vehicle configured to inhibit accumulation of precipitation on the windows of a vehicle and further desired effects wherein the outer surface of the body could have Teflon disposed thereon so as to assist in the prevention of accumulation of precipitation.

Still a further object of the present invention is to provide a motor vehicle window accessory wherein the accessory is placed adjacent to all or some of the windows of a motor vehicle wherein the present invention can be powered by either the electrical power of the motor vehicle or have an independent power source.

A further object of the present invention is to provide a provide a window treatment apparatus for a motor vehicle configured to inhibit accumulation of precipitation on the windows of a vehicle and further desired effects wherein the present invention includes a controller and a software application that provides operational control of the present invention with features such as but not limited to operational cycles and time schedules.

An alternative objective of the present invention is to provide a motor vehicle window accessory wherein the accessory is placed adjacent to all or some of the windows of a motor vehicle wherein the outer surface could have advertising indicia disposed on a portion thereof.

Another object of the present invention is to provide a window treatment apparatus for a motor vehicle configured to inhibit accumulation of precipitation on the windows of a vehicle and further desired effects wherein the body could be configured for climates to provide cooling of the interior of the vehicle.

Yet a further object of the present invention is to provide a motor vehicle window accessory wherein the accessory is placed adjacent to all or some of the windows of a motor vehicle wherein the body could have at least one exterior light integrated thereon wherein the light can be activated by the software application so as to provide a visual signal as to the location of a motor vehicle.

Another object of the present invention is to provide a window treatment apparatus for a motor vehicle configured to inhibit accumulation of precipitation on the windows of a vehicle and further desired effects wherein the body or the mounting apparatus thereof could have a fragrance module that is operable to release a fragrance into the motor vehicle.

An additional object of the present invention is to provide a motor vehicle window accessory wherein the accessory is placed adjacent to all or some of the windows of a motor vehicle wherein the body could be configured with securing lines or other similar element so as to assist in the deployment and/or securing of the present invention.

Still a further object of the present invention is to provide a window treatment apparatus for a motor vehicle configured to inhibit accumulation of precipitation on the windows of a vehicle and further desired effects wherein in one embodiment a photovoltaic panel could be include in the top portion of the body.

Yet a further object of the present invention is to provide a motor vehicle window accessory wherein the accessory is placed adjacent to all or some of the windows of a motor vehicle wherein the present invention can be controlled by a key fob or by the software application.

To the accomplishment of the above and related objects the present invention may be embodied in the form illustrated in the accompanying drawings. Attention is called to the fact that the drawings are illustrative only. Variations are contemplated as being a part of the present invention, limited only by the scope of the claims.

### BRIEF DESCRIPTION OF THE DRAWINGS

A more complete understanding of the present invention may be had by reference to the following Detailed Description and appended claims when taken in conjunction with the accompanying Drawings wherein:
Figure 1 is a diagrammatic view of an embodiment of the present invention; and

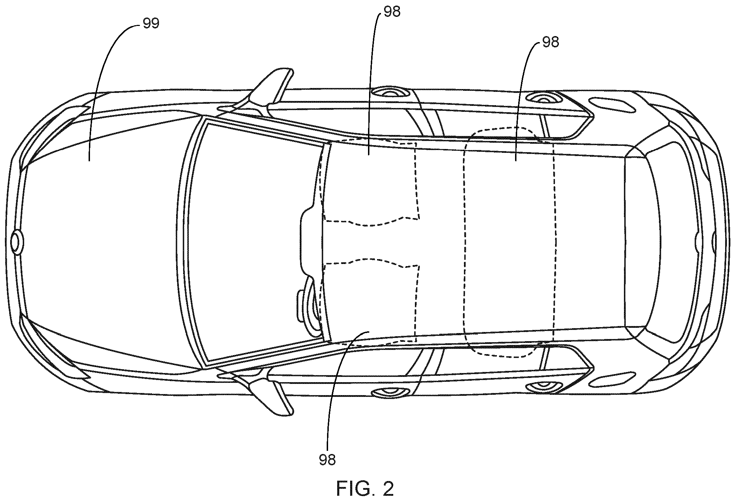

Figure 2 is a top view of an exemplary vehicle having the present invention superposed thereon; and

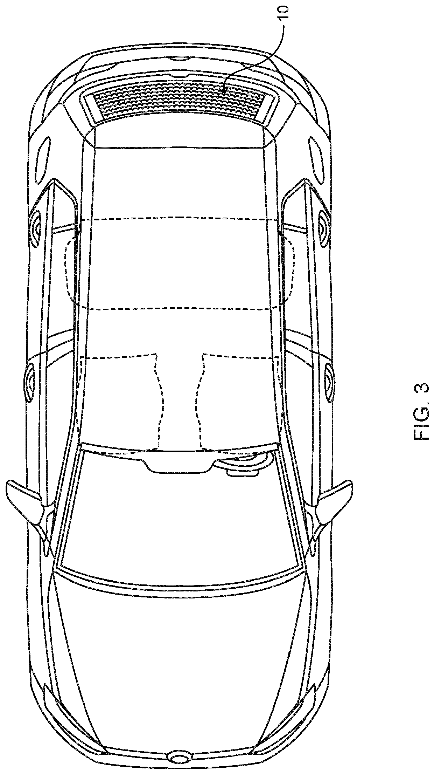

Figure 3 is a top view of an exemplary vehicle with the present invention superposed the rear window.

### DETAILED DESCRIPTION

References now to the drawings submitted herewith, wherein various elements depicted therein are not necessarily drawn to scale and wherein through the views and figures like elements are referenced with identical reference numerals, there is illustrated a vehicular window accessory 100 constructed according to the principles of the present invention.

An embodiment of the present invention is discussed herein with reference to the figures submitted herewith. Those skilled in the art will understand that the detailed description herein with respect to these figures is for explanatory purposes and that it is contemplated within the scope of the present invention that alternative embodiments are plausible. By way of example but not by way of limitation, those having skill in the art in light of the present teachings of the present invention will recognize a plurality of alternate and suitable approaches dependent upon the needs of the particular application to implement the functionality of any given detail described herein, beyond that of the particular implementation choices in the embodiment described herein. Various modifications and embodiments are within the scope of the present invention.

It is to be further understood that the present invention is not limited to the particular methodology, materials, uses and applications described herein, as these may vary. Furthermore, it is also to be understood that the terminology used herein is used for the purpose of describing particular embodiments only, and is not intended to limit the scope of the present invention. It must be noted that as used herein and in the claims, the singular forms "a", "an" and "the" include the plural reference unless the context clearly dictates otherwise. Thus, for example, a reference to "an element" is a reference to one or more elements and includes equivalents thereof known to those skilled in the art. All conjunctions used are to be understood in the most inclusive sense possible. Thus, the word "or" should be understood as having the definition of a logical "or" rather than that of a logical "exclusive or" unless the context clearly necessitates otherwise. Structures described herein are to be understood also to refer to functional equivalents of such structures. Language that may be construed to express approximation should be so understood unless the context clearly dictates otherwise.

References to "one embodiment", "an embodiment", "exemplary embodiments", and the like may indicate that the embodiment(s) of the invention so described may include a particular feature, structure or characteristic, but not every embodiment necessarily includes the particular feature, structure or characteristic.

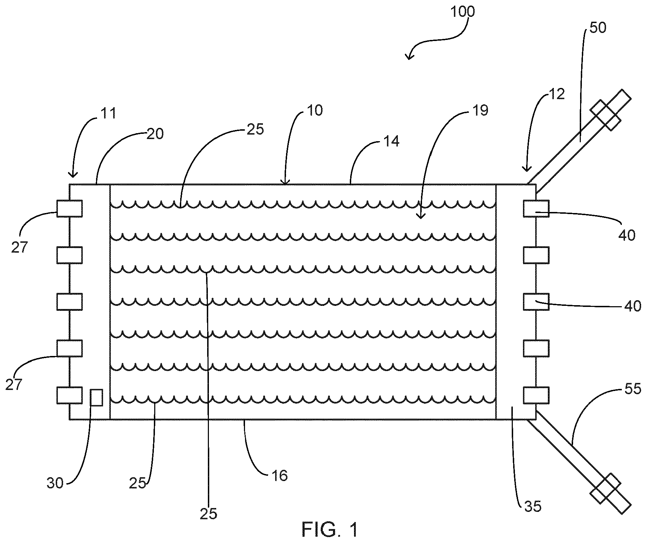

Now referring to Figure 1 submitted herewith, the vehicular window accessory 100 includes a body member 10 that is manufactured from a transparent material such as but not limited to plastic. The body member 10 includes a first end 11 and a second end 12 and is generally rectangular in shape. The body member 10 further includes an upper peripheral edge 14 and lower peripheral edge 16. Body member 10 is configured to be superposed and adjacent a window or windows of an exemplary vehicle 99. The body member 10 is configured to be deployed intermediate a first position and a second position wherein in the second position the body member 10 is deployed to be adjacent and substantially covering a window or windows of the exemplary vehicle 99.

The body member 10 is stored in its first position in container 20 wherein in the first position the body member 10 is in a rolled position within the container 20. In a preferred embodiment, the container 20 is configured to be formed in a size so as to be mounted to a vertical door jamb of a vehicle. The container 20 is sized and mounted so as to permit normal closure of the door of the vehicle 99. The container 20 is manufactured from a suitable rigid material such as but not limited to plastic. The container 20 is releasably secured to the door jamb of the vehicle 99 and is releasably secured utilizing magnets 27. The magnets 27 are of suitable strength to maintain the desired position of the container 20 within the door jamb of the vehicle 99. While magnets 27 are disclosed and discussed herein as being provided for releasably securing the container 20 in the preferred embodiment, it is contemplated within the scope of the present invention that the container 20 could be releasably secured utilizing alternate techniques or elements. Furthermore, it should be understood within the scope of the present invention that the container 20 could be provided in alternate sizes in order to mateably fit within a door jamb of a vehicle 99.

The body member 10 includes plurality of heating elements 25 formed therein. The heating elements 25 are operable to maintain the temperature of the body member 10 at a temperature above freezing. The heating elements 25 are dispersed intermediate the upper peripheral edge 14 and lower peripheral edge 16 and are manufactured from a suitable flexible conductive material. The heating elements 25 are operably coupled to controller 30 wherein the controller 30 is configured to provide electrical currentto the heating elements 25 in order to achieve a temperature of the body member 10 that is above freezing. It is contemplated within the scope of the present invention that the controller 30 could be operably coupled to the electrical system of the vehicle 99 or have its own internal power source in order to provide the necessary electrical current to generate the necessary temperature so as to inhibit ice forming on the body member 10.

The body member 10 includes end member 35 proximate the second end 12. The end member 35 extends intermediate the upper peripheral edge 14 and lower peripheral edge 16 and is manufactured from a material that is durable and flexible. The end member 35 provides the necessary added strength and structure to the body member 10 so as to be moved to its second position wherein in its second position the body member 10 is deployed across a window or windows of the vehicle and adjacent thereto. Secured to the end member 35 are magnets 40 wherein magnets 40 are operable to secure the end member 35 in a desired location. While magnets 40 are disclosed herein as being preferred for a technique to secure the second end 12, it is contemplated within the scope of the present invention that alternate elements could be used in place of and/or in conjunction with the magnets 40. Furthermore, it should be understood within the scope of the present invention that various quantities of magnets could be employed to secured the end member 35.

The controller 30 is configured to provide operable control of the vehicular window accessory 100. Controller 30 includes the necessary electronics to receive, store, manipulate and transmit data. It is contemplated within the scope of the present invention that the vehicular window accessory 100 is operable via a software application on a smart phone. The controller 30 provides the operational interface for a user to control the vehicular window accessory 100. It is contemplated within the scope of the present invention that the controller 30 could be electrically coupled to the electrical system of the vehicle 99 or have its own internal power source.

The body member 10 further includes securing straps 50,55. Securing straps 50,55 are manufactured from a suitable material such as but not limited to nylon. The securing straps 50, 55 are configured to be utilized to be grasped by a user of the vehicular window accessory 100 and deploy the body member 10 to its second position. Additionally, the securing straps 50,55 are configured to be secured to an anchor point within the vehicle 99 ensuing deployment of the body member 10 to its second position.

It is further contemplated within the scope of the present invention that the upper peripheral edge 14 and lower peripheral edge 16 have securing elements such as but not limited to magnets embedded therein in order to ensure securing of the body member 10. Furthermore, the body member 10 includes outer surface 19 wherein the outer surface 19 is coated with a material such as but not limited to Teflon so as to facilitate the reduction of friction thereto and as such provide an additional technique of ice or snow accumulating thereon. It is further contemplated within the scope of the present invention that the outer surface 19 could have indicia imprinted thereon so as to provide an advertising space for a desired entity.

The controller 30 is further configured to provide location identity of the vehicle 99. As the controller 30 is operably coupled to a software application on a smart phone, the controller 30 is operable to provide a user information as to the location of the vehicle 99. It is further contemplated within the scope of the present invention that the container 20 could further have disposed therein a fragrance or fragrance emitter wherein the fragrance or fragrance emitter is configured to release a pleasant odor into the interior of the vehicle 99.

It should be understood within the scope of the present invention that the body member 10 could be of size to be deployed so as to be adjacent a single window of the vehicle or be deployed so as to be circumferentially disposed around the entire vehicle 99 and the windows thereof. Additionally, it is contemplated within the scope of the present invention that the vehicular window accessory 100 could include at least one indicator light so as to provide a visual signal as to the location of the vehicle 99. Furthermore, it is within the scope of the present invention that the vehicular window accessory 100 be provided with at least one photovoltaic panel 98 that is electrically coupled to the controller 30 and is operable to provide electrical current thereto.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. The description may omit certain information known to those skilled in the art.

## Claims

1. A vehicular window accessory (100) suitable for being operably coupled to a vehicle, the vehicular window accessory being configured to maintain a temperature above a freezing point wherein the vehicular window accessory comprises:
a body member (10), said body member having a first end (11) and a second end (12), said body member having a plurality of heating elements (25) disposed therein, said heating elements being configured to maintain a temperature of the body member that is above freezing temperature, said body member having an upper peripheral edge (14) and a lower peripheral edge (16); and
a container (20), said container being configured to store said body member;
wherein said body member is movable intermediate between a first position and a second position;
the vehicular window accessory being **characterized in that** said body member is manufactured from a transparent flexible material, and **in that** said container has a plurality of magnets (27) secured thereto, said container being operable to be positioned within a door jamb of a vehicle (99).

2. The vehicular window accessory as recited in claim 1, wherein in said first position said body member is substantially disposed within said container.

3. The vehicular window accessory as recited in claim 2, wherein in said second position said body member is deployed outward from said container and adjacent at least one window of the vehicle.

4. The vehicular window accessory as recited in claim 3, wherein said body member further includes at least one securing strap (50,55), said at least one securing strap being operably coupled to said second end of said body member.

5. The vehicular window accessory as recited in claim 4, wherein said second end of said body member further includes a plurality of magnets (40) secured thereto.

6. The vehicular window accessory as recited in claim 5, the vehicular window accessory further comprising a controller (30), wherein the heating elements are operably coupled to the controller, wherein the controller is configured to provide electrical current to the heating elements in order to achieve a temperature of the body member that is above freezing, and wherein said controller is configured to be operably coupled to a smart phone.

7. The vehicular window accessory as recited in claim 6, the vehicular window accessory further including one or more of: at least one photovoltaic panel (98), said at least one photovoltaic panel being disposed on the vehicle and electrically coupled to said controller, a fragrance emitter, said fragrance emitter configured to dispense a fragrance within an interior of the vehicle, and at least one indicator light, said at least one indicator light being coupled to said body member, said indicator light operable to assist in locating the vehicle.

8. The vehicular window accessory as recited in claim 7, wherein said body member further includes an outer surface (19), said outer surface of said body member having a coating disposed thereon, wherein the coating reduces friction of the outer surface.

9. The vehicular window accessory as recited in claim 8, wherein the outer surface of the body member is configured to have indicia imprinted thereon.

10. The vehicular window accessory as recited in claim 1, wherein said second end of said body member has a plurality of magnets (40) secured thereto; and
wherein the vehicular window accessory compromises at least one securing strap (50,55), said at least one securing strap being operably coupled to said second end of said body member; and
wherein in said first position said body member is rolled within the container.

11. The vehicular window accessory as recited in claim 10, wherein in said second position said body member is deployed so as to circumferentially mount the windows of the vehicle and be adjacent thereto.

12. The vehicular window accessory as recited in claim 11, the vehicular window accessory further comprising a controller (30), wherein the heating elements are operably coupled to the controller, wherein the controller is configured to provide electrical current to the heating elements in order to achieve a temperature of the body member that is above freezing the vehicular window accessory further including one or more of: at least one photovoltaic panel (98), said at least one photovoltaic panel being disposed on the vehicle and electrically coupled to said controller, at least one indicator light, said at least one indicator light being coupled to said body member, said indicator light operable to assist in locating the vehicle, and a fragrance emitter, said fragrance emitter configured to dispense a fragrance within a interior of the vehicle.

13. The vehicular window accessory as recited in claim 12, wherein said body member further includes an outer surface (19), said outer surface of said body member having a coating disposed thereon, wherein the coating reduces friction of the outer surface.

14. The vehicular window accessory as recited in claim 13, wherein the outer surface of the body member is configured to have indicia imprinted thereon.

## Patentansprüche

1. Fahrzeugfensterzubehör (100), das geeignet ist, um funktionsfähig mit einem Fahrzeug gekoppelt zu sein, wobei das Fahrzeugfensterzubehör konfiguriert ist, um eine Temperatur über einem Gefrierpunkt aufrechtzuerhalten, wobei das Fahrzeugfensterzubehör umfasst:
ein Körperelement (10), wobei das Körperelement ein erstes Ende (11) und ein zweites Ende (12) aufweist, wobei das Körperelement eine Vielzahl von Heizelementen (25), die darin angeordnet sind, umfasst, wobei die Heizelemente konfiguriert sind, um eine Temperatur des Körperelements aufrechtzuerhalten, die über Gefriertemperatur liegt, wobei das Körperelement eine obere umfängliche Kante (14) und eine untere umfängliche Kante (16) aufweist; und
einen Behälter (20), wobei der Behälter konfiguriert ist, um das Körperelement zu lagern;
wobei das Körperelement zwischen einer ersten Position und einer zweiten Position bewegbar ist;
wobei das Fahrzeugfensterzubehör **dadurch gekennzeichnet ist, dass** das Körperelement aus einem transparenten biegsamen Material hergestellt ist, und dass der Behälter eine Vielzahl von Magneten (27) daran befestigt aufweist, wobei der Behälter funktionsfähig ist, um innerhalb eines Türpfostens eines Fahrzeugs (99) positioniert zu sein.

2. Fahrzeugfensterzubehör nach Anspruch 1, wobei das Körperelement in der ersten Position im Wesentlichen innerhalb des Behälters angeordnet ist.

3. Fahrzeugfensterzubehör nach Anspruch 2, wobei das Körperelement in der zweiten Position von dem Behälter nach außen ausgefahren und an mindestens einem Fenster des Fahrzeugs benachbart ist.

4. Fahrzeugfensterzubehör nach Anspruch 3, wobei das Körperelement weiter mindestens einen Befestigungsbügel (50, 55) beinhaltet, wobei der mindestens eine Befestigungsbügel funktionsfähig mit dem zweiten Ende des Körperelements gekoppelt ist.

5. Fahrzeugfensterzubehör nach Anspruch 4, wobei das zweite Ende des Körperelements weiter eine Vielzahl von Magneten (40), die daran befestigt sind, beinhaltet.

6. Fahrzeugfensterzubehör nach Anspruch 5, wobei das Fahrzeugfensterzubehör weiter eine Steuereinheit (30) umfasst, wobei die Heizelemente funktionsfähig mit der Steuereinheit gekoppelt sind, wobei die Steuereinheit konfiguriert ist, um elektrischen Strom zu den Heizelementen bereitzustellen, um eine Temperatur des Körperelements zu erzielen, die oberhalb des Gefrierens ist, und wobei die Steuereinheit konfiguriert ist, um funktionsfähig mit einem Smartphone gekoppelt zu sein.

7. Fahrzeugfensterzubehör nach Anspruch 6, wobei das Fahrzeugfensterzubehör weiter eines oder mehrere beinhaltet: mindestens einer fotovoltaischen Tafel (98), wobei die mindestens eine fotovoltaische Tafel auf dem Fahrzeug angeordnet und elektrisch mit der Steuereinheit gekoppelt ist, einen Duftspender, wobei der Duftspender konfiguriert ist, um einen Duft innerhalb des Innenraums des Fahrzeugs abzugeben, und mindestens eine Kontrollleuchte, wobei die mindestens eine Kontrollleuchte mit dem Körperelement gekoppelt ist, wobei die Kontrollleuchte funktionsfähig ist, um beim Lokalisieren des Fahrzeugs zu unterstützen.

8. Fahrzeugfensterzubehör nach Anspruch 7, wobei das Körperelement weiter eine Außenoberfläche (19) beinhaltet, und die Außenoberfläche des Körperelements eine Beschichtung darauf angeordnet aufweist, wobei die Beschichtung Reibung der Außenoberfläche reduziert.

9. Fahrzeugfensterzubehör nach Anspruch 8, wobei die Außenoberfläche des Körperelements konfiguriert ist, um Markierungen darauf gedruckt aufzuweisen.

10. Fahrzeugfensterzubehör nach Anspruch 1, wobei das zweite Ende des Körperelements eine Vielzahl von Magneten (40) daran befestigt aufweist; und
wobei das Fahrzeugfensterzubehör mindestens einen Befestigungsbügel (50, 55) kompromittiert, wobei der mindestens eine Befestigungsbügel funktionsfähig mit dem zweiten Ende des Körperelements gekoppelt ist; und
wobei das Körperelement in der ersten Position innerhalb des Behälters aufgerollt ist.

11. Fahrzeugfensterzubehör nach Anspruch 10, wobei das Körperelement in der zweiten Position derart ausgefahren ist, dass es die Fenster des Fahrzeugs umfänglich montiert und an sie angrenzt.

12. Fahrzeugfensterzubehör nach Anspruch 11, wobei das Fahrzeugfensterzubehör weiter eine Steuereinheit (30) umfasst, wobei die Heizelemente funktionsfähig mit der Steuereinheit gekoppelt sind, wobei die Steuereinheit konfiguriert ist, um elektrischen Strom zu den Heizelementen bereitzustellen, um eine Temperatur des Körperelements zu erzielen, die über dem Gefrieren liegt, wobei das Fahrzeugfensterzubehör weiter eines oder mehrere umfasst: mindestens einer fotovoltaischen Tafel (98), wobei die mindestens eine fotovoltaische Tafel auf dem Fahrzeug angeordnet und elektrisch mit der Steuereinheit gekoppelt ist, mindestens einer Kontrollleuchte, wobei die mindestens eine Kontrollleuchte mit dem Körperelement gekoppelt ist, wobei die Kontrollleuchte funktionsfähig ist, um beim Lokalisieren des Fahrzeugs zu unterstützen, und einen Duftspender, wobei der Duftspender konfiguriert ist, um einen Duft innerhalb eines Innenraums des Fahrzeugs abzugeben.

13. Fahrzeugfensterzubehör nach Anspruch 12, wobei das Körperelement weiter eine Außenoberfläche (19) beinhaltet, wobei die Außenoberfläche des Körperelements eine Beschichtung darauf angeordnet aufweist, wobei die Beschichtung Reibung der Außenoberfläche reduziert.

14. Fahrzeugfensterzubehör nach Anspruch 13, wobei die Außenoberfläche des Körperelements konfiguriert ist, um Markierungen darauf gedruckt aufzuweisen.

## Revendications

1. Accessoire de fenêtre de véhicule (100) approprié pour être couplé de manière opérationnelle à un véhicule, l'accessoire de fenêtre de véhicule étant configuré pour maintenir une température au-dessus d'un point de congélation, dans lequel l'accessoire de fenêtre de véhicule comprend :
un élément de corps (10), ledit élément de corps présentant une première extrémité (11) et une seconde extrémité (12), ledit élément de corps présentant une pluralité d'éléments chauffants (25) disposés en son sein, lesdits éléments chauffants étant configurés pour maintenir une température de l'élément de corps qui est supérieure à la température de congélation, ledit élément de corps présentant un bord périphérique supérieur (14) et un bord périphérique inférieur (16) ; et
un contenant (20), ledit contenant étant configuré pour stocker ledit élément de corps ;
dans lequel ledit élément de corps est mobile de manière intermédiaire entre une première position et une seconde position ;
l'accessoire de fenêtre de véhicule étant **caractérisé en ce que** ledit élément de corps est fabriqué à partir d'un matériau flexible transparent, et **en ce que** ledit contenant présente une pluralité d'aimants (27) fixés à celui-ci, ledit contenant étant opérationnel pour être positionné à l'intérieur d'un montant de porte d'un véhicule (99).

2. Accessoire de fenêtre de véhicule selon la revendication 1, dans lequel dans ladite première position, ledit élément de corps est disposé sensiblement à l'intérieur dudit contenant.

3. Accessoire de fenêtre de véhicule selon la revendication 2, dans lequel dans ladite seconde position, ledit élément de corps est déployé vers l'extérieur depuis ledit contenant et adjacent à au moins une fenêtre du véhicule.

4. Accessoire de fenêtre de véhicule selon la revendication 3, dans lequel ledit élément de corps inclut en outre au moins une sangle de fixation (50, 55), ladite au moins une sangle de fixation étant couplée de manière opérationnelle à ladite seconde extrémité dudit élément de corps.

5. Accessoire de fenêtre de véhicule selon la revendication 4, dans lequel ladite seconde extrémité dudit élément de corps inclut en outre une pluralité d'aimants (40) fixés à celle-ci.

6. Accessoire de fenêtre de véhicule selon la revendication 5, l'accessoire de fenêtre de véhicule comprenant en outre un dispositif de commande (30), dans lequel les éléments chauffants sont couplés de manière opérationnelle au dispositif de commande, dans lequel le dispositif de commande est configuré pour fournir un courant électrique aux éléments chauffants afin d'atteindre une température de l'élément de corps qui est supérieure à la congélation, et dans lequel ledit dispositif de commande est configuré pour être couplé de manière opérationnelle à un smartphone.

7. Accessoire de fenêtre de véhicule selon la revendication 6, l'accessoire de fenêtre de véhicule incluant en outre un ou plusieurs parmi : au moins un panneau photovoltaïque (98), ledit au moins un panneau photovoltaïque étant disposé sur le véhicule et couplé électriquement audit dispositif de commande, un émetteur de parfum, ledit émetteur de parfum étant configuré pour distribuer un parfum à l'intérieur du véhicule, et au moins un indicateur lumineux, ledit au moins un indicateur lumineux étant couplé audit élément de corps, ledit indicateur lumineux étant opérationnel pour aider à localiser le véhicule.

8. Accessoire de fenêtre de véhicule selon la revendication 7, dans lequel ledit élément de corps inclut en outre une surface extérieure (19), ladite surface extérieure dudit élément de corps présentant un revêtement disposé sur celle-ci, dans lequel le revêtement réduit un frottement de la surface extérieure.

9. Accessoire de fenêtre de véhicule selon la revendication 8, dans lequel la surface extérieure de l'élément de corps est configurée pour présenter des inscriptions imprimées sur celle-ci.

10. Accessoire de fenêtre de véhicule selon la revendication 1, dans lequel ladite seconde extrémité dudit élément de corps présente une pluralité d'aimants (40) fixés à celle-ci ; et
dans lequel l'accessoire de fenêtre de véhicule compromet au moins une sangle de fixation (50, 55), ladite au moins une sangle de fixation étant couplée de manière opérationnelle à ladite seconde extrémité dudit élément de corps ; et
dans lequel dans ladite première position, ledit élément de corps est enroulé à l'intérieur du contenant.

11. Accessoire de fenêtre de véhicule selon la revendication 10, dans lequel dans ladite seconde position, ledit élément de corps est déployé afin de monter de manière circonférentielle les fenêtres du véhicule et d'être adjacent à celles-ci.

12. Accessoire de fenêtre de véhicule selon la revendication 11, l'accessoire de fenêtre de véhicule comprenant en outre un dispositif de commande (30), dans lequel les éléments chauffants sont couplés de manière fonctionnelle au dispositif de commande, dans lequel le dispositif de commande est configuré pour fournir un courant électrique aux éléments chauffants afin d'atteindre une température de l'élément de corps qui est supérieure à la congélation, l'accessoire de fenêtre de véhicule incluant en outre un ou plusieurs parmi : au moins un panneau photovoltaïque (98), ledit au moins un panneau photovoltaïque étant disposé sur le véhicule et couplé électriquement audit dispositif de commande, au moins un indicateur lumineux, ledit au moins un indicateur lumineux étant couplé audit élément de corps, ledit indicateur lumineux étant opérationnel pour aider à localiser le véhicule, et un émetteur de parfum, ledit émetteur de parfum étant configuré pour distribuer un parfum à l'intérieur du véhicule.

13. Accessoire de fenêtre de véhicule selon la revendication 12, dans lequel ledit élément de corps inclut en outre une surface extérieure (19), ladite surface extérieure dudit élément de corps présentant un revêtement disposé sur celle-ci, dans lequel le revêtement réduit un frottement de la surface extérieure.

14. Accessoire de fenêtre de véhicule selon la revendication 13, dans lequel la surface extérieure de l'élément de corps est configurée pour présenter des inscriptions imprimées sur celle-ci.
